(19) Europäisches Patentamt
European Patent Office
Office européen des brevets

(11) Numéro de publication : **0 500 417 A1**

(12) # DEMANDE DE BREVET EUROPEEN

(21) Numéro de dépôt : **92400348.6**

(51) Int. Cl.$^5$ : **H01B 1/12,** C08G 73/06

(22) Date de dépôt : **11.02.92**

(30) Priorité : **19.02.91 FR 9101931**

(43) Date de publication de la demande :
**26.08.92 Bulletin 92/35**

(84) Etats contractants désignés :
**DE GB**

(71) Demandeur : **THOMSON-CSF**
**51, Esplanade du Général de Gaulle**
**F-92800 Puteaux (FR)**

(72) Inventeur : **Sagnes, Olivier**
**THOMSON-CSF, SCPI, Cédex 67**
**F-92045 Paris la Défense (FR)**
Inventeur : **Michel, Philippe**
**THOMSON-CSF, SCPI, Cédex 67**
**F-92045 Paris la Défense (FR)**

(74) Mandataire : **Guérin, Michel et al**
**THOMSON-CSF SCPI 51, Esplanade du Général de Gaulle**
**F-92045 PARIS LA DEFENSE CEDEX 67 (FR)**

(54) **Procédé d'obtention de polymères conducteurs stables thermiquement.**

(57) La présente invention concerne un nouveau procédé d'obtention de polymères conducteurs permettant d'accroître et de stabiliser thermiquement leur conductivité.

Les polymères sont obtenus par voie chimique oxydative en présence d'un codopant dont les anions sont plus stables que les anions oxydant. La synthèse du polymère est par ailleurs suivie d'un traitement thermique permettant de stabiliser la conductivité du matériau obtenu.

Application : Absorbants microondes

EP 0 500 417 A1

La présente invention concerne un nouveau procédé d'obtention de polymères conducteurs permettant d'accroître et de stabiliser thermiquement leur conductivité.

L'obtention d'une bonne stabilité thermique rend alors de tels polymères utilisables industriellement puisque leur mise en forme nécessite généralement des étapes dans lesquelles un échauffement entraîne le plus souvent une diminution de leur conduction.

A l'heure actuelle plusieurs voies de synthèse conduisent à l'obtention de polymères conducteurs.

La voie électrochimique a été la voie la plus étudiée qui a permis de synthétiser des polymères présentant des bonnes performances mais ce type de synthèse conduit nécessairement à l'obtention d'un film et non d'une poudre. Les rendements et les quantités inhérents à cette voie de synthèse rendent celle-ci difficile à exploiter industriellement. Plus précisément la voie électrochimique consiste en une électropolymérisation durant laquelle le polymère se développe sur une électrode et est rendu conducteur par l'insertion d'espèces ioniques stabilisant la conduction. Ce mode de synthèse permet une grande variété de polymérisation tant au niveau monomère ( pyrrole, thiophène, aniline, indole ... ) qu'au niveau espèces stabilisantes.

Lors du processus de croissance de la chaîne polymère sur l'anode, l'oxydation du polymère entraîne la création d'un défaut électronique (conduction de type p). Dans le cas de pyrrole par exemple, ceci est de l'ordre de 1 trou pour trois motifs hétérocycles.

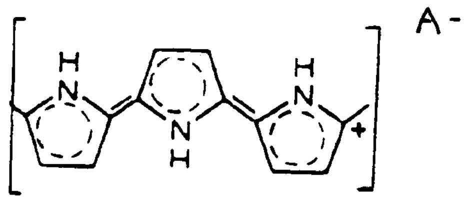

L'électrolyte A présent se dissocie et stabilise la conduction p, en se "complexant" sur la chaîne. La stabilité thermique de la conduction du polymère conducteur résulte alors principalement de la stabilité de la fixation de l'anion.

Les meilleurs résultats ont été obtenus sur le polymère conducteur brut à l'aide d'anions paratoluène sulfonate, phénysulfonate, alkylfluorosulfonate comparativement aux anions d'encombrement stérique faible tels que $BF_4$-, $PF_6$-, $C10_4$-. En outre il semble que la fonction $RSO_3$ - soit d'un potentiel électronégatif supérieur à ceux des anions $BF_4$-, $PF_6$-, $C10_4$- ou RC00- ce qui favorise son accrochage dans la matrice polymère.

Parallèlement à la voie électrochimique, des travaux sont menés sur la polymérisation oxydative, ce type de synthèse purement chimique met en jeu un couple redox et permet de réaliser une poudre conductrice avec des tailles submicroniques (1µm à 0,1µm) et ce avec un excellent rendement.

Généralement le protocole réactionnel met en présence un oxydant de type $FeCl_3$, $Fe(N0_3)_3$ ou $CuCl_2$ .... qui va se réduire en présence de monomère.

Le monomère ayant été oxydé, se polymérise en courtes chaînes (20 à 50 unités monomère). L'anion apporté par l'oxydant se comporte de manière similaire à celui de l'électrolyse. Par exemple dans le couple pyrrole, chlorure ferrique la réaction d'oxydoréduction est la suivante :

$$FeCl_3 \text{ ----> } Fe^{3+} + 3\ Cl^-$$
$$Fe^{3+} - 1e \text{ ----> } Fe^{2+}$$

et

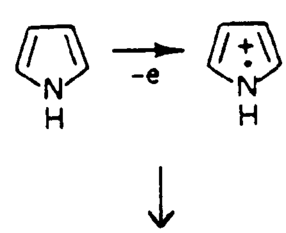


stabilisation

3

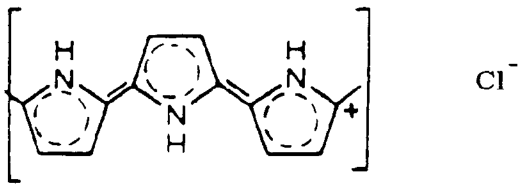

La chaîne ainsi synthétisée, comporte donc des anions de faible encombrement et de faible électronégativité. Les poudres semiconductrices ne sont pas très stables thermiquement et vis-à-vis de l'oxydation. Pour exemple, des poudres de polypyrrole ne supportent pas d'être chauffées à plus de 80°C durant quelques heures. Leur conductivité chute en dessous de $10^{-3}$ s/cm, seuil au delà duquel le processus d'élimination diffusionnel des anions devient plus lent. Il en est de même pour la polyaniline vers 120°C.

La synthèse par voie chimique présentant le grand intérêt de fournir des poudres utilisables dans des procédés de plasturgie, mélangeables avec d'autres polymères liants, la présente invention propose un nouveau procédé d'obtention de polymère conducteur utilisant cette voie chimique tout en améliorant notablement la conductivité et sa stabilité thermique.

Ce procédé comprend l'introduction d'anions stables électrochimiquement ( cités dans la synthèse par voie électrochimique), les anions de faible encombrement liés à l'agent oxydant (par exemple les ions $Cl^-$) étant partiellement remplacés par ceux de fort encombrement tels qu'on les utilise en électropolymérisation.

Ce nouveau procédé comprend donc une première étape de synthèse s'effectuant en présence du monomère, d'un sel oxydant et en plus d'un sel codopant présentant des anions stables électrochimiquement. Pour assurer une stabilité thermique, le polymère ainsi obtenu est chauffé à une température correspondant au départ des anions instables de l'oxydant, le polymère conducteur ainsi obtenu ne comprend plus dans sa matrice que les anions stabilisants du codopant.

La présente invention sera mieux comprise et d'autres avantages apparaîtront à la lecture de la description qui va suivre, donnée à titre non limitatif et grâce aux figures annexées parmi lesquels:

– la figure 1 représente le spectre en calorimétrie différentielle à balayage d'une poudre de polymère codopé ;

– la figure 2 représente le spectre en calorimétrie différentielle à balayage d'une poudre de polymère codopée déjà chauffée à 150°C ;

– la figure 3 représente l'évolution de la conductivité avec le temps, à 60°C pour différents rapports molaires (codopant)/(oxydant),

– la figure 4 représente l'évolution de la conductivité avec le temps à 60°C, pour différents anions codopants.

Dans la synthèse selon le procédé de l'invention, le monomère est polymérisé par action d'un sel oxydant classique, il s'agit de préférence d'un sel de métal de transition.

Au cours de la réaction d'oxydation, il apparaît un défaut électronique p au niveau des unités monomères, ce défaut étant stabilisé par l'anion du sel oxydant.

Pour exemple lors de la synthèse du polypyrrole en présence de chlorure ferrique $FeCl_3$, les trois monomères sont stabilisés par un ion $Cl^-$, des dosages ont montré qu'en réalité l'anion stabilisant est $FeCl_4^-$ . Ces anions ne sont cependant pas très stables car ils ont tendance à diffuser et s'échapper de la matrice polymère. C'est pourquoi le procédé selon l'invention propose d'ajouter au monomère et à son agent oxydant amorceur de la polymérisation, un sel codopant. Ce sel codopant est de préférence un sel d'ammonium quaternaire ou un sel de sodium.

Il n'est pas responsable de la polymérisation mais présent dans le réseau polymère formé, il se substitue aux anions du sel oxydant lorsque ceux-ci instables exudent du réseau. Le couple agent oxydant-agent codopant permet d'obtenir un polymère conducteur dont la conductivité est stabilisée par la présence de l'anion codopant qui de par sa nature présente un volume plus important que celui des anions oxydants existant. L'anion codopant piégé dans la matrice stabilise les défauts électroniques et se trouve plus fortement piégé dans la matrice de par son volume et donc diffuse beaucoup plus difficilement à l'extérieur de la matrice.

Au cours de la synthèse une proportion excédentaire d'agent codopant est introduite dans le milieu réactionnel. Lors du traitement thermique qui succède à la synthèse, lorsqu'on se place à une température telle qu'il y a départ des anions oxydants, les anions codopant peuvent compenser le départ de ces derniers.

C'est pourquoi les sels codopants sont choisis en fonction des possibilités de synthèse, de la taille de l'anion et de son électronégativité. Les anions d'ammonium quaternaire ou de sodium peuvent être en raison de l'intérêt qu'ont montré les ions sulfonate en synthèse électrochimique, des alkysulfonate ou des alkylben-

zénique sulfonate ou des $CF_3$ $(CF_2)_nSO_3^-$ ou bien encore des naphlylsulfonate.

Le radical sulfonate n'est pas choisi parmi les macromolécules pour éviter d'obtenir un anion trop volumineux pouvant déformer exagérément le réseau et perturber la conductivité du matériau. En effet, la conductivité résultante est due non seulement à la conduction intra-chaînes polymériques mais aussi à la conduction inter-chaînes polymériques qui se verrait géner dans le cas où les chaînes seraient trop éloignées

Pour valider ces concepts plusieurs synthèses ont été effectuées avec des sels codopants de nature différente, en pourcentages molaires par rapport au sel oxydant variables. La conductivité des produits de synthèse ainsi obtenus a été étudiée en température et en temps pour analyser les phénomènes de décroissance de la conduction de ces polymères conducteurs.

**EXEMPLE A** :

Il s'agit de la synthèse du polypyrrole en présence de chlorure ferrique. Plusieurs codopants ont été expérimentés.

1. Le toluène sulfonate tétraéthyl ammonium (note Ts)
2. L'hepta décafluoro octane sulfonate tétraéthyl ammonium (noté F sulfo).

Le cation du sel codopant peut être indifféremment de l'ammonium quaternaire ou du sodium, les résultats obtenus étant identiques.

Plusieurs durées de synthèse ont été expérimentées (18 heures et 20 heures). Il s'avère qu'au delà de 4 à 6 heures de réaction, la cinétique est très faible.

L'utilisation des sels de nature 1 ou de nature 2 induit la synthèse de deux poudres différentes. La première notée (Ts) est une poudre fine aisée à disperser, la seconde notée (Fsulfo) est visqueuse moins aisée à manipuler. Cependant ces deux poudres conduisent toutes les deux a une conductivité supérieure à celle obtenue en l'absence de codopant (Tableau I).

| [Codopant]/[oxydant] | 0 | [Ts]/[$FeCl_3$] | [Fsulfo]/[$TeCl_3$] |
|---|---|---|---|
| T(s/cm) | 1,15 | 4,78 | 2,9 |

**TABLEAU I**

Il s'agit de mesures de conductivité surfacique réalisées par la méthode consistant à prendre 4 pointes équidistantes. Elles sont réalisées sur des poudres pressées dans des conditions identiques (masse de polymère conducteur, pression, durée, moule).

Par ailleurs le comportement thermique d'une poudre obtenue à partir d'un sel oxydant ($FeCl_3$) et d'un sel codopant (Ts) a été étudié pour mieux comprendre l'évolution de la conductivité en fonction du temps et de la température. Par calorimètre différentielle à balayage sur un échantillon avec un sel codopant Ts on obtient deux massifs endothermiques, l'un entre 60 et 50°C correspondant à l'éviction des ions $FeCl_4$-, un second vers 150°C caractéristique de la présence des ions tosylates (figure 1). L'échantillon subissant alors un deuxième cycle thermique ne fait plus apparaître qu'un massif à haute température relatif aux ions tosylates restants (figure 2). Le phénomène de diffusion des ions codopants est suffisamment lent pour conserver un taux caractéristique.

**EXEMPLE 2** :

La synthèse du polypyrrole a été effectuée en présence de $FeCl_3$ et de différents pourcentages molaires de (Ts).

La figure 3 montre qu'il existe un rapport optimun compris entre 0,5 et 1 pour le rapport molaire (Ts)/($FeCl_3$).

L'étude en temps a été effectuée à 60°C pour illustrer les phénomènes de décroissance de la conductivité. A cette température la décroissance est d'environ 40 % en présence de toluène sulfonate alors qu'elle atteint 90 % sans agent codopant. De plus, au delà de 40 heures, la dégradation enregistrée en présence de Ts se stabilise, alors qu'en l'absence de toluène sulfonate, la dégradation de la conductivité tend vers une valeur nulle.

Un comportement analogue est observé lorsque la synthèse du polypyrrole est effectuée en présence de $FeCl_3$ et de (Fsulfo) (figure 4).

Le traitement thermique effectué vers 60°C, température correspondant à l'éviction des ions ($FeCl_4$-) de la matrice polymère permet d'obtenir un polymère conducteur dont la conductivité est beaucoup plus stable en temps et ce pour des températures allant au delà de 60 °C.

## Revendications

1. Procédé d'obtention de polymère conducteur permettant d'augmenter la conductivité en la stabilisant thermiquement caractérisé en ce qu'il comprend les étapes suivantes :
   – synthèse du polymère par voie chimique en présence du monomère, d'un sel oxydant et d'un sel codopant ;
   – traitement thermique du polymère conducteur obtenu comprenant des anions oxydants et des anions codopants à la température d'éviction des anions oxydants de la matrice polymère, ladite température étant inférieure à la température d'éviction de la matrice des anions codopants.

2. Procédé selon la revendication 1, caractérisé en ce que le monomère est un hétérocycle ou un dérivé d'hétérocycle ou de l'aniline ou un dérivé d'aniline.

3. Procédé selon l'une des revendications 1 ou 2, caractérisé en ce que le sel oxydant est un sel de métal de transition.

4. Procédé selon la revendication 4, caractérisé en ce que le sel de métal de transition est le chlorure ferrique hexahydrate $FeCl_3$.

5. Procédé selon l'une des revendications 1 à 4, caractérisé en ce que le sel codopant est un sel d'ammonium quaternaire ou un sel de sodium.

6. Procédé selon la revendication 5, caractérisé en ce que l'anion du sel d'ammonium quaternaire est un alkylsulfonate ou un alkylbenzénique sulfonate ou un $CF_3(CF_2)_nSO_3^-$ ou un naphtyl sulfonate.

7. Procédé selon l'une des revendications 1 à 6, caractérisé en ce que le rapport molaire sel codopant/sel oxydant est voisin de 0,5.

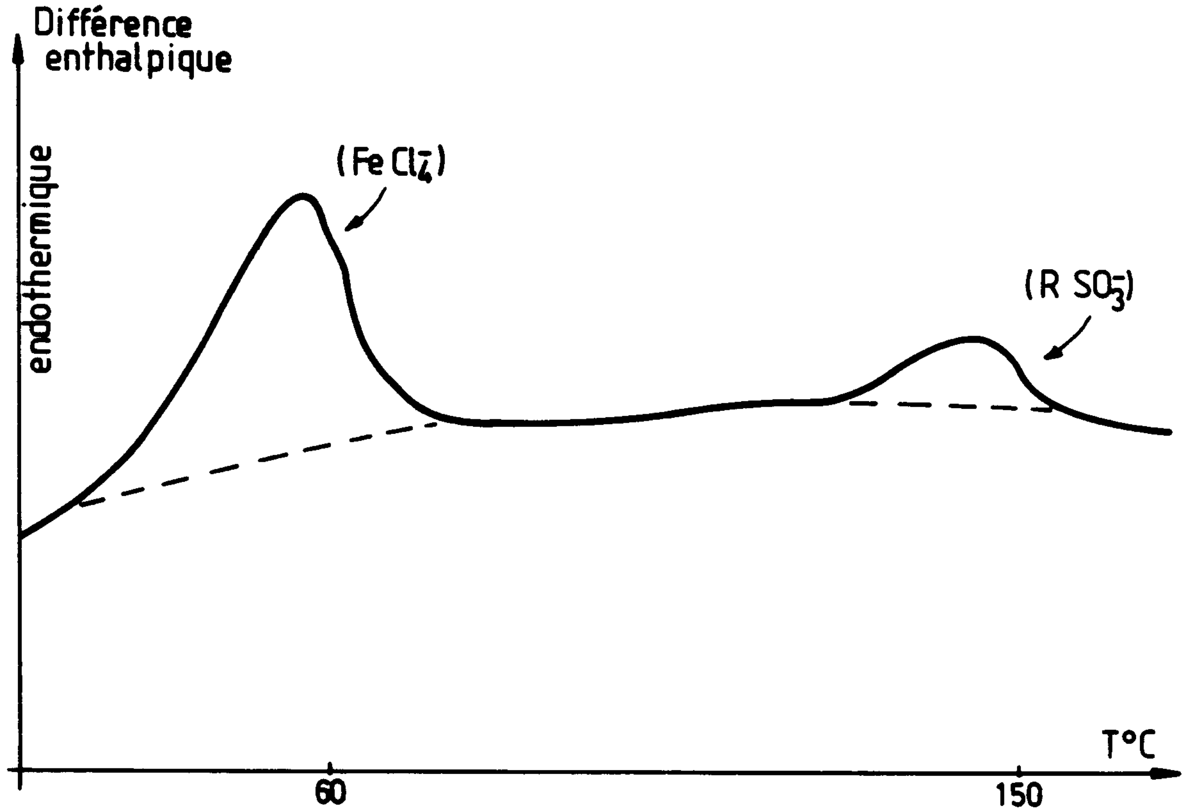
Différence
enthalpique
endothermique
(Fe Cl$_4^-$)
(R SO$_3^-$)
T°C
60
150

FIG.1

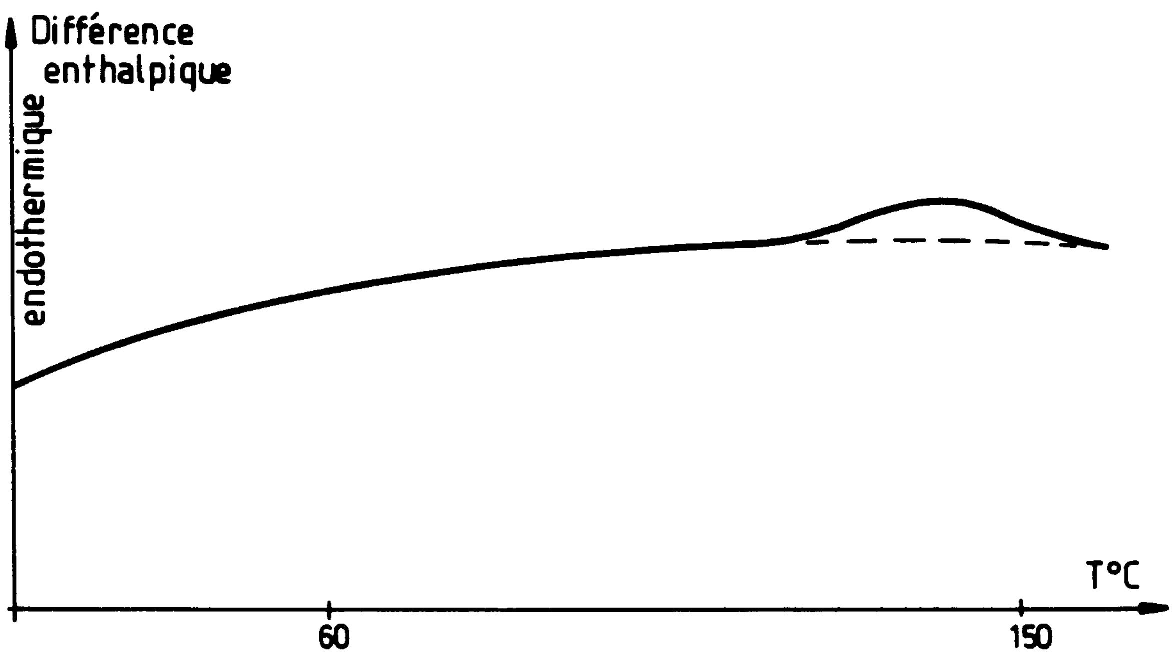
Différence
enthalpique
endothermique
T°C
60
150

FIG.2

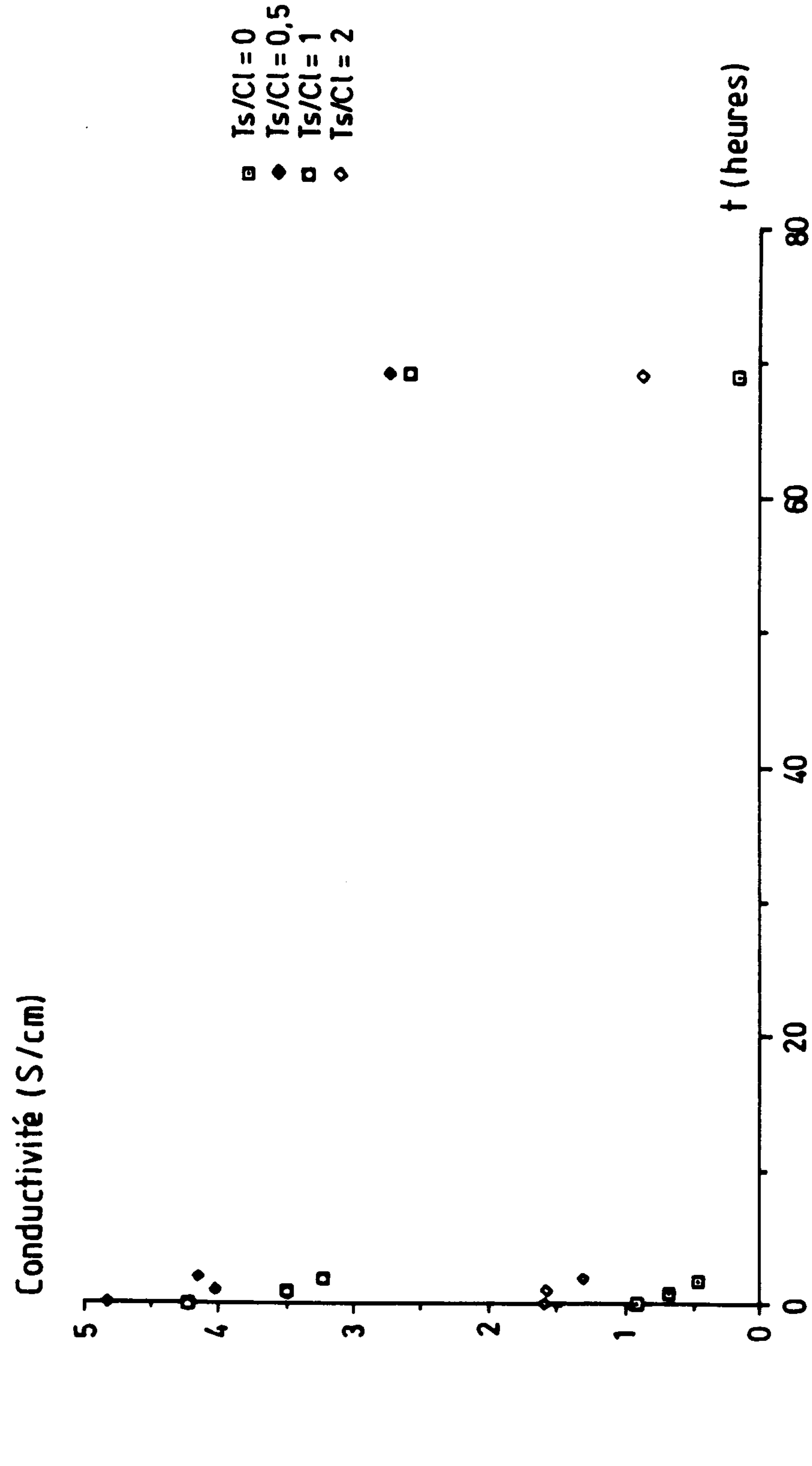
Conductivité (S/cm)
t (heures)
Ts/Cl = 0
Ts/Cl = 0,5
Ts/Cl = 1
Ts/Cl = 2
0
1
2
3
4
5
0
20
40
60
80

FIG. 3

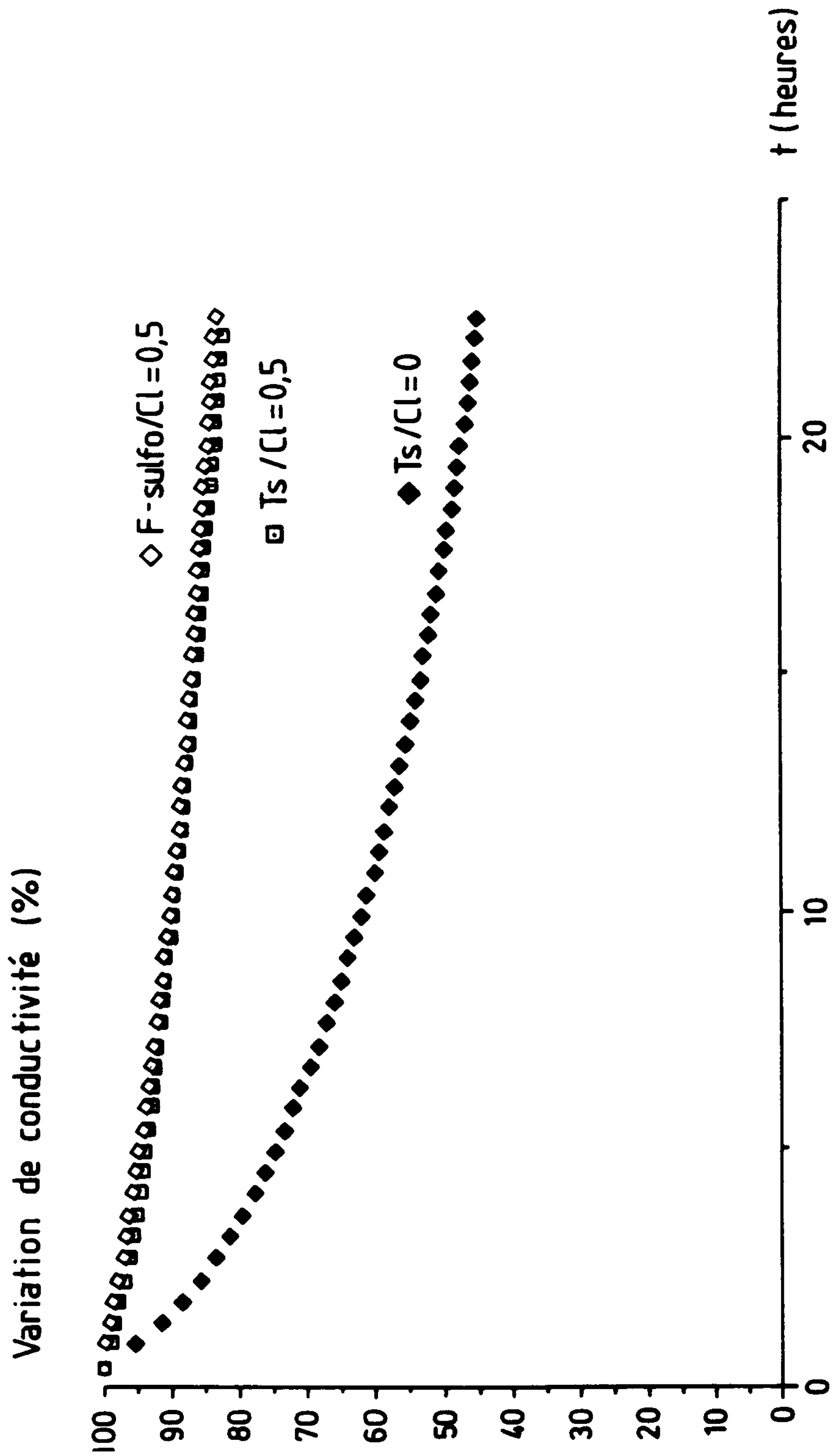
Variation de conductivité (%)
t (heures)
◇ F-sulfo/Cl=0,5
□ Ts /Cl=0,5
◆ Ts /Cl=0
100
90
80
70
60
50
40
30
20
10
0
0
10
20

FIG. 4

Office européen des brevets

# RAPPORT DE RECHERCHE EUROPEENNE

Numero de la demande

EP 92 40 0348

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 352 882 (MILLIKEN RESEARCH)<br>* colonne 11, ligne 25 - ligne 36 *<br>* revendications 1-21 *<br>--- | 1-3,5,6 | H01B1/12<br>C08G73/06 |
| A | EP-A-0 349 105 (MILLIKEN RESEARCH)<br>* page 5, ligne 11 - ligne 22 *<br>* page 5, ligne 26 - ligne 33 *<br>* page 6, ligne 1 - ligne 9; revendications 1-19; exemples 1,6 *<br>--- | 1-6 | |
| A | DATABASE DERWENT WORLD PATENT INDEX<br>AN 87-132560 & JPA 62072715(MITSUI TOATSU)<br>*abstract*<br>----- | 1-6 | |
| | | | **DOMAINES TECHNIQUES RECHERCHES (Int. Cl.5 )** |
| | | | H01B<br>C08G |

Le présent rapport a été établi pour toutes les revendications

| Lieu de la recherche | Date d'achèvement de la recherche | Examinateur |
|---|---|---|
| LA HAYE | 19 MAI 1992 | DROUOT M.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)